# FASCICULE DE BREVET EUROPEEN

(11) **EP 0 387 458 B1**
(45) Date de publication et mention de la délivrance du brevet: **08.12.1993**
(21) Numéro de dépôt: 89400722.8
(22) Date de dépôt: 15.03.1989
(51) Int. Cl.: B60J 7/06

(54) **Véhicule de transport couvert par bâche**
Von einer Plane bedecktes Transportfahrzeug
Transport vehicle covered by a tarpaulin

(43) Date de publication de la demande: 19.09.1990
(73) Titulaire: LIBNER CISM, F-79400 Saint-Maixent l'Ecole (FR)
(72) Inventeur: Libner, Joseph Casimir, F-79420 Reffannes (FR)
(74) Mandataire: CABINET BONNET-THIRION

(56) Documents cités:
- DE-B- 1 265 601
- FR-A- 2 024 746
- FR-A- 2 536 709

## Description

L'invention se rapporte à un véhicule de transport couvert par bâche, notamment, mais non exclusivement une remorgue de camion; l'invention concerne plus particulièrement un perfectionnement permettant de dégager complètement le plateau de chargement d'un tel véhicule, lors des opérations de chargement et de déchargement.

On connaît des véhicules routiers du type comportant un plateau de chargement surmonté d'une armature métallique définissant les limites d'un espace de chargement couvert, au-dessus dudit plateau. Des bâches tendues sur cette armature, matérialisent ledit espace de chargement couvert. A titre d'exemple, une remorque couverte de ce genre est bien connue dans la technique sous le nom de "Savoyarde". Un système classique de ce genre comporte une armature fixe composée principalement d'un support de toit, de montants latéraux et de parois transversales avant et arrière, cette dernière étant le plus souvent agencée en porte. Une bâche de toit est tendue sur le support de toit. Sur certains systèmes, des rideaux coulissants sont prévus pour fermer les faces latérales. Le fait que l'armature soit fixe, complique les opérations de chargement et de déchargement du fait que le plateau ne peut être complètement dégagé. De ce point de vue, un progrès significatif a été réalisé en prévoyant des montants latéraux déplaçables le long des bords longitudinaux du plateau, par exemple rattachés à une glissière d'une poutre longiudinale du support de toit, chaque montant comportant par exemple un support roulant adapté à se déplacer dans cette glissière. Un tel système est décrit dans la demande de brevet français FR-A-2 595 304 déposée par le Demandeur.

Les documents FR-2 536 709 et FR-2 024 746 divulguent des systèmes automatiques de manoeuvre des bâches associés à une armature métallique fixe ou à une caisse calorifugée rigide.

L'invention a pour but d'améliorer encore l'accessibilité du plateau pendant le chargement et le déchargement. L' invention permet notamment de dégager complètement ce plateau, pour qu'il devienne accessible par le haut et sur toute la longueur d'un côté. De ce fait, le véhicule peut être facilement chargé ou déchargé au moyen d'une grue, ce qui était impossible ou très délicat jusqu'à présent, en raison de la structure du toit.

Dans cet esprit, l'invention concerne donc essentiellement un véhicule de transport couvert par bâche comportant un plateau et une armature de bâche pour former un espace couvert au-dessus dudit plateau, ladite armature comportant un support de toit comprenant deux poutres longitudinales parallèles dont au moins une constitue le seul élément de structure commun audit support de toit et à une face verticale longitudinale adjacente de ladite armature, caractérisé en ce que cette poutre est montée avec possibilité de déplacement, parallèlement à elle-même, pour pouvoir la déplacer dans la direction de l'autre et dégager ainsi complètement la face supérieure et la face latérale dudit espace couvert, sans élément de structure à leur intersection.

Divers modes de réalisation de l'invention sont, précisés dans les revendications dépendantes 2 à 8.

L'invention sera mieux comprise et d'autres avantages de celle-ci apparaîtront plus clairement à la lumière de la description qui va suivre d'un mode de réalisation possible d'une remorque de transport routier conforme à son principe, donnée uniquement à titre d'exemple et faite en référence aux dessins annexés dans lesquels:
- la figure 1 est une vue de dessus d'une remorque conforme à l'invention, en situation normale pour le transport de marchandises;
- la figure 2 est une vue de dessus du même véhicule, analogue à la figure 1 mais représentant ladite remorque en situation de chargement ou déchargement;
- la figure 3 est une coupe III-III de la figure 1 limitée à la partie supérieure de l'armature; et
- la figure 4 est une vue partielle en perspective, avec arrachements, illustrant les mécanismes assurant le déplacement d'une poutre longitudinale de l'armature.

En se reportant aux dessins, on a représenté une remorque de camion 11 dont les éléments principaux sont: un plateau de transport 12 monté sur un châssis roulant, une paroi transversale avant 13, une paroi transversale arrière 14 formant porte à double battant et une armature métallique 15 s'étendant entre les deux parois transversales 13 et 14 et prenant appui sur celle-ci. Cette armature métallique 15 est constituée de montants latéraux (non représentés) s'étendant verticalement le long des côtés longitudinaux du plateau 12 et d'un support de toit 17. Ce dernier est conformé pour définir un toit à deux pentes faiblement inclinées. Les deux faces latérales longitudinales sont, par exemple, fermées par des bâches agencées en rideaux coulissants, comme cela est décrit dans la demande de brevet mentionnée ci-dessus. Le support de toit 17 est soutenu par les deux parois avant et arrière 13, 14 et par les montants latéraux mentionnés ci-dessus. Ceux-ci peuvent être du même type que ceux qui sont décrits dans la demande de brevet antérieure déjà citée, c'est-à-dire montés avec possibilité d'être déplacés le long des poutres longitudinales 19, 20, horizontales, du support de toit. De tels montants peuvent ainsi être regroupés à une extrémité de la remorque pendant les opérations de chargement et de déchargement. Ils peuvent aussi tout simplement être démontables. L'ensemble de l'armature et des bâches (lesquelles ne sont pas représentées sur les dessins) définit ainsi un espace couvert au-dessus du plateau 12. Lorsque la remorque est en situation de transporter des marchandises, les poutres 19 et 20, parallèles et horizontales, sont écartées l'une de l'autre de façon à être situées sensiblement au-dessus des bords longitudinaux du plateau 12, respectivement; ces poutres s'étendent entre les parois transversales 13 et 14.

Selon l'invention, au moins l'une des poutres, ici la poutre 20, est montée avec possibilité de déplacement, parallèlement à elle-même, pour pouvoir la déplacer dans la direction de l'autre, c'est-à-dire vers la poutre 19.

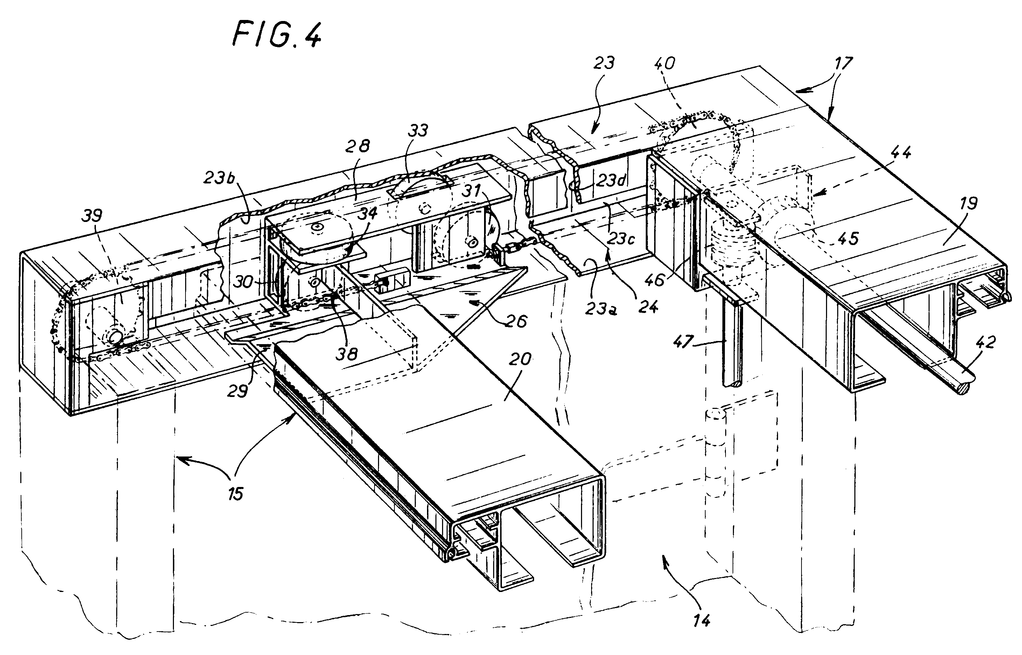

Pour ce faire, des rails creux 22, 23 situés au niveau dudit support de toit 17 et complétant ce dernier, sont fixés horizontalement aux parties supérieures des parois transversales 13 et 14, respectivement. Chacun de ces rails a, comme représenté sur la figure 4, une structure de profilé métallique, le profil ayant la forme d'un rectangle non complètement fermé sur l'un de ses côtés. Ainsi se trouve définie une ouverture 24 s'étendant sur toute la longueur du rail. La poutre 19 est fixée, par soudure et/ou boulonnage, ou tout autre moyen convenable, entre deux extrémités des rails 22, 23 situées d'un même côté de la remorque. La poutre 20 est munie à ses deux extrémités, de supports mobiles 25, 26 formant chariots, assujettis à se déplacer dans les rails creux 22, 23, respectivement. Chacun d'eux, engagé dans l'un des rails, comporte des galets coopérant avec les parois internes de ce rail. Ainsi, en considérant plus particulièrement la figure 4, on voit qu'un tel support, ici le support 26, est réalisé à partir d'un tronçon métallique profilé 28, à profil en C, engagé dans le rail 23 et prolongé vers l'extérieur de celui-ci, par une embase 29 sur laquelle est fixée l'extrémité correspondante de la poutre 20. L'embase 29 traverse l'ouverture 24 du rail creux. Des éléments métalliques sont soudés à l'intérieur du tronçon 28 pour définir, avec les parois de celui-ci, un certain nombre de chapes dans lesquelles différents galets sont montés en rotation. On distingue ainsi deux galets verticaux inférieurs 30, 31 situés l'un à côté de l'autre, et engagés au travers de fenêtres pratiquées dans l'aile horizontale inférieure du tronçon 28, pour pouvoir rouler sur une face horizontale inférieure 23a de l'intérieur du rail 23. Le support comporte en outre au moins un galet vertical supérieur 33 engagé au travers d'une fenêtre pratiquée dans l'aile horizontale supérieure du tronçon 28 et susceptible de limiter le mouvement vertical du support à un léger jeu prédéterminé, en venant rouler sur une face horizontale supérieure 23b de l'intérieur du rail 23. Il comporte en outre au moins un galet horizontal 34 engagé au travers d'une fenêtre pratiquée dans l'aile verticale du tronçon 28 et dépassant également du côté ouvert dudit tronçon. Le diamètre de ce galet est légèrement inférieur à la distance séparant les deux faces verticales 23c et 23d de l'intérieur du rail 23. Ce galet permet donc de limiter le mouvement horizontal du support 26 à un léger jeu prédéterminé, en venant rouler sur la face 23c ou 23d, selon les cas.

Ainsi, les galets 30, 31 assurent le déplacement par roulement du support 26 tandis que les galets 33 et 34 assurent un guidage correct de ce support, en évitant la mise en travers et le blocage de la poutre 20 entre les deux rails 22, 23.

L'agencement du support 25, opposé, est symétrique. Il est engagé dans un rail 22 disposé symétriquement par rapport au rail 23 représenté à la figure 4.

D'autre part, chaque support mobile 25, 26 est rattaché aux deux extrémités d'une chaîne 38 s'enroulant autour de deux pignons 39, 40, montés respectivement aux deux extrémités du rail creux 22 ou 23, correspondant. Les deux pignons 40 voisins de la poutre 19, fixe, sont coaxiaux et montés sur un arbre commun 42 logé dans ladite poutre fixe 19. Cet arbre 42 est actionné via un mécanisme réducteur 44 comprenant, selon l'exemple, un pignon 45 solidaire de l'arbre 42 et une vis sans fin 46 en prise avec ce pignon. Cette vis sans fin est montée à l'extrémité d'un arbre vertical de manoeuvre 47 qui se prolonge vers le bas jusqu'au niveau du plateau 12. Cet arbre 44 peut être actionné manuellement, en étant couplé à une manivelle. De préférence, il sera couplé à un moteur électrique ou à d'autres moyens d'actionnement pneumatique ou hydraulique convenables. Une commande à distance peut également être prévue.

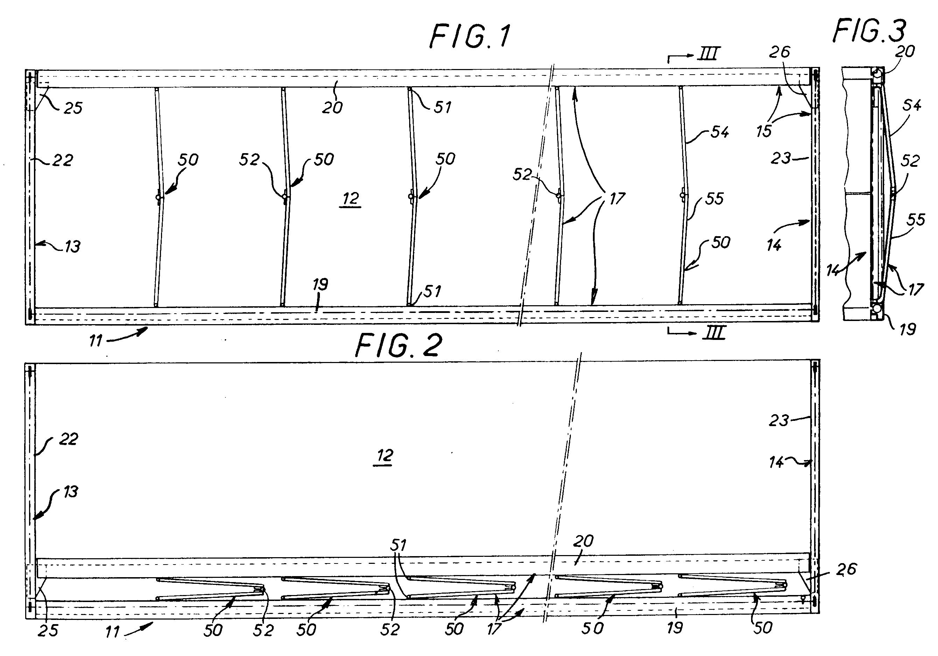

Par ailleurs, comme le montrent les figures 1 à 3, le support de toit 17 est muni de traverses intermédiaires 50, agencées à intervalles réguliers entre les deux parois 13 et 14. Chacune de ces traverses est articulée en 51 par ses extrémités aux deux poutres 19 et 20 et comporte une articulation médiane 52 (constituée par exemple par une charnière) permettant son repliement sur elle-même, comme le montre la figure 2, lorsque la poutre 20 se rapproche de la poutre 19. Les deux tronçons 54, 55, qui constituent une telle traverse 50 (lesdits tronçons étant raccordés par l'articulation médiane 52), forment un angle obtus très ouvert, en projection sur un plan vertical (figure 3) pour dessiner la double pente du toit. En outre, dans l'exemple représenté, ces mêmes tronçons 54, 55 forment un angle obtus très ouvert en projection sur un plan horizontal, lorsque la poutre 20 est dans sa position la plus éloignée de la poutre 19, c'est-à-dire lorsque le véhicule est en état de rouler. Cette légère "cassure" de chaque traverse 55 permet d'assurer son repliement automatique (le sens du mouvement étant en quelque sorte "amorcé") lorsque la poutre 20 commence à se rapprocher de la poutre 19. On peut aussi prévoir, par sécurité, un câble reliant toutes les articulations 52 des traverses 50. Ce câble est alors sollicité par un treuil ou tout autre moyen convenable pour initialiser le mouvement de repliement des traverses. Dans un mode de réalisation où les traverses seraient droites en projection horizontale, lorsque le véhicule est dans l'état qui correspond à la représentation de la figure 1, la présence d'un tel câble (ou d'un autre mécanisme remplissant la même fonction) serait alors nécessaire. Des moyens de verrouillage de la poutre 20, non représentés, sont avantageusement prévus pour immobiliser cette dernière dans la position qu'elle occupe sur la figure 1. Cependant, l'immobilisation en translation de la poutre 20 peut simplement être assurée par un blocage convenable de l'arbre de manoeuvre 47 et éventuellement renforcée par le verrouillage des articulations médianes 52.

Bien entendu, l'invention n'est pas limitée au mode de réalisation qui vient d'être décrit. En particulier, on peut parfaitement envisager de remplacer le système de manoeuvre à chaînes, par un ensemble de vérins ou de traverses télescopiques s'étendant entre les deux poutres et remplaçant ou jouxtant les traverses 50.

## Revendications

1. Véhicule de transport couvert par bâche comportant un plateau et une armature de bâche pour former un espace couvert au-dessus dudit plateau, ladite armature comportant un support de toit (17) comprenant deux poutres longitudinales (19, 20) parallèles dont au moins une (20) constitue le seul élément de structure commun audit support de toit et à une face verticale longitudinale adjacente de ladite armature, caractérisé en ce que cette poutre (20) est montée avec possibilité de déplacement, parallèlement à elle-même, pour pouvoir la déplacer dans la direction de l'autre (19) et dégager ainsi complètement la face supérieure et la face latérale dudit espace couvert, sans élément de structure à leur intersection.

2. Véhicule de transport selon la revendication 1, caractérisé en ce que les deux extrémités de cette poutre déplaçable (20) sont munies de supports mobiles, formant chariots, respectivement assujettis à se déplacer dans deux rails creux (22, 23) s'étendant transversalement, sensiblement au niveau dudit support de toit (17), à l'avant et à l'arrière dudit espace couvert.

3. Véhicule de transport selon la revendication 2, caractérisé en ce que chaque support mobile (25, 26) comporte des galets (30, 31, 33, 34) coopérant avec des parois internes du rail creux (22, 23) correspondant.

4. Véhicule de transport selon la revendication 2 ou 3, caractérisé en ce que chaque support mobile (25, 26) est rattaché aux deux extrémités d'une chaîne (38) s'enroulant autour de deux pignons (39, 40) montés respectivement aux deux extrémités du rail creux (23) correspondant.

5. Véhicule de transport selon la revendication 4, caractérisé en ce que les pignons (39, 40) situés aux extrémités des deux rails creux qui sont voisines d'une poutre fixe (19) précitée, sont montés sur un arbre commun (42) logé dans cette poutre fixe.

6. Véhicule de transport selon la revendication 5, caractérisé en ce que cet arbre commun (42) est actionné, via un mécanisme réducteur (44), comprenant par exemple un pignon (45) solidaire dudit arbre et une vis sans fin (46).

7. Véhicule de transport selon la revendication 6, caractérisé en ce que ce mécanisme réducteur (44) est couplé à un moteur électrique ou à un moyen d'entraînement analogue.

8. Véhicule de transport selon l'une des revendications précédentes, caractérisé en ce que ledit support de toit (17) comprend au moins une traverse intermédiaire (50) articulée par ses extrémités aux deux poutres (19, 20) précitées et en ce que cette traverse comporte une articulation médiane (52) permettant son repliement pendant le déplacement d'une poutre (20) vers l'autre (19).

## Claims

1. A transport vehicle covered by a tarpaulin comprising a platform and a tarpaulin framework to form a covered space above the said platform, the said framework comprising a roof support (17) including two parallel longitudinal beams (19, 20), at least one (20) of which constitutes the sole structural element common to the said roof support and to an adjacent vertical longitudinal face of the said framework, characterised in that this beam (20) is mounted with the facility of being displaced parallel to itself, so as to be able to displace it in the direction of the other beam (19) and thus to open up the upper face and the side face of the said covered space completely, without a structural element at their intersection.

2. A transport vehicle according to claim 1, characterised in that the two ends of the said displaceable beam (20) are provided with movable supports forming carriages, fastened so as to be displaceable within two hollow rails (22, 23) extending transversely substantially at the level of the said roof support (17) at the front and the rear of the said covered space, respectively.

3. A transport vehicle according to claim 2, characterised in that each movable support (25, 26) comprises rollers (30, 31, 33, 34) cooperating with internal walls of the corresponding hollow rail (22, 23).

4. A transport vehicle according to claims 2 or 3, characterised in that each movable support (25, 26) is attached to the two ends of a chain, (38) circulating round two pinions (39, 40), respectively mounted on the two ends of the corresponding hollow rail (23).

5. A transport vehicle according to claim 4, characterised in that the pinions (39, 40) situated at the ends of the two hollow rails which are adjacent to the aforementioned fixed beam (19) are mounted on a common shaft (42) housed in this fixed beam.

6. A transport vehicle according to claim 5, characterised in that the said common shaft (42) is driven via a reducing mechanism (44), comprising a pinion (45) integral with the said shaft and a worm (46), for example.

7. A transport vehicle according to claim 6, characterised in that the said reducing mechanism (44) is coupled to an electric motor or to a similar driving means.

8. A transport vehicle according to one of the preceding claims, characterised in that the said roof support (17) comprises at least one intermediate cross-beam (50) articulated at its ends to the two aforementioned beams (19, 20), and that the said cross-beam comprises a central articulated joint (52) enabling it to be folded back during the displacement of one beam (20) towards the other (19).

## Patentansprüche

1. Von einer Plane abgedecktes Transportfahrzeug, umfassend eine Ladefläche und ein Planengerüst zur Schaffung eines abgedeckten Raums oberhalb der Ladefläche, wobei das Gerüst aufweist: einen Dachträger (17) mit zwei parallelen Längsträgern (19, 20), von denen zumindest einer (20) das einzige Bauelement darstellt, welches dem Dachträger und einer dem Gerüst benachbarten vertikalen Längsseite gemeinsam ist, dadurch gekennzeichnet, daß dieser Träger (20) parallel zu sich selbst versetzbar gelagert ist, um in Richtung auf den anderen (19) versetzbar zu sein und damit die Oberseite und die Seitenfläche des abgedeckten Raums vollständig freizulegen, ohne daß sie von einem Bauelement durchkreuzt werden.

2. Transportfahrzeug nach Anspruch 1, dadurch gekennzeichnet, daß die zwei Enden dieses versetzbaren Trägers (20) mit beweglichen Lagern ausgestattet sind, welche Schlitten bilden, die jeweils derart befestigt sind, daß sie in zwei sich quer erstreckenden hohlen Schienen (22, 23) etwa auf der Höhe des Dachträgers (17) bezüglich des abgedeckten Raums vor und zurück versetzbar sind.

3. Transportfahrzeug nach Anspruch 2, dadurch gekennzeichnet, daß jedes bewegliche Lager (25, 26) Rollen (30, 31, 33, 34) aufweist, die mit den Innenwänden der entsprechenden hohlen Schienen (22, 23) zusammenwirken.

4. Transportfahrzeug nach Anspruch 2 oder 3, dadurch gekennzeichnet, daß jedes bewegliche Lager (25, 26) an den beiden Enden einer Kette (38) befestigt ist, welche um zwei Kettenräder (39, 40) umläuft, die an den beiden Enden der entsprechenden hohlen Schiene (23) gelagert sind.

5. Transportfahrzeug nach Anspruch 4, dadurch gekennzeichnet, daß die an den Enden der zwei hohlen schienen, welche dem vorgenannten ortsfesten Träger (19) benachbart sind, gelegenen Kettenräder (39, 40) auf einer gemeinsamen Welle (42) sitzen, die in dem ortsfesten Träger untergebracht ist.

6. Transportfahrzeug nach Anspruch 5, dadurch gekennzeichnet, daß diese gemeinsame Welle (42) über einen Untersetzungsmechanismus (44) betätigt wird, welcher beispielsweise aus einem mit der Welle einstückigen Zahnrad (45) und einer Schnecke (46) besteht.

7. Transportfahrzeug nach Anspruch 6, dadurch gekennzeichnet, daß der Untersetzungsmechanismus (44) mit einem Elektromotor oder einem äquivalenten Antriebsmittel gekoppelt ist.

8. Transportfahrzeug nach einem der vorgenannten Ansprüche, dadurch gekennzeichnet, daß der Dachträger (17) mindestens eine Zwischentraverse (50) aufweist, die mit ihren Enden gelenkig an den beiden vorgenannten Trägern (19, 20) angebracht ist, und daß diese Traverse ein Mittelgelenk (52) aufweist, welches ihr Zusammenfalten während der Versetzung des einen Trägers (20) in Richtung des anderen (19) gestattet.
